# EUROPÄISCHE PATENTSCHRIFT

(11) **EP 3 065 907 B1**
(45) Veröffentlichungstag und Bekanntmachung des Hinweises auf die Patenterteilung: **10.10.2018**
(21) Anmeldenummer: 14823970.0
(22) Anmeldetag: 17.12.2014
(51) Int. Cl.: B23K 35/02, C22C 1/04, C22C 19/00, C22F 1/10, B23K 35/30, C22C 19/07

(54) **MANGANHALTIGE HOCHTEMPERATURLOTLEGIERUNG AUF KOBALTBASIS, PULVER, BAUTEIL UND LOTVERFAHREN**
MANGANESE CONTAINING COBALT-BASED BRAZE ALLOY, POWDER, COMPONENT AND BRAZING METHOD
ALLIAGE DE SOUDURE À BASE DE COBALT ET CONTENANT DU MANGANÈSE, POUDRE, PIÈCE ET PROCÉDÉ DE SOUDURE

(30) Priorität: 08.01.2014 DE 102014200121
(43) Veröffentlichungstag der Anmeldung: 14.09.2016
(73) Patentinhaber: Siemens Aktiengesellschaft, 80333 München (DE)
(72) Erfinder: LAUX, Britta, 14059 Berlin (DE)
(86) Internationale Anmeldenummer: PCT/EP2014/078169
(87) Internationale Veröffentlichungsnummer: WO 2015/104154

(56) Entgegenhaltungen:
- EP-A1- 2 022 599
- WO-A1-97/10368
- WO-A1-98/45491

## Beschreibung

Die Erfindung betrifft eine manganhaltige Kobaltbasislegierung, die beim Löten verwendet werden kann, ein Pulver, ein Bauteil und ein Lotverfahren.

Aufgrund ihrer hohen thermischen Leitfähigkeit im Vergleich zu Nickelbasislegierungen werden die stationären Komponenten der ersten Turbinenstufe teilweise aus Kobaltbasislegierungen wie MAR-M 509 hergestellt. Dies gilt sowohl für stationäre Gasturbinen als auch für Flugzeugturbinen.

Für stoffschlüssige Fügeverbindungen an diesen Komponenten, die in Form von Hochtemperaturlötungen ausgeführt werden, stehen hauptsächlich Nickel-Basislote zur Verfügung. Diese konventionellen Nickel-Basislote enthalten Bor und/oder Silizium als Schmelzpunkterniedriger. Aufgrund der unterschiedlichen Wärmeausdehnungskoeffizienten von Kobalt und Nickel kann es im Bereich der Fügezone zu hohen Eigenspannungen kommen, die zu einer Schwächung des Fügeverbundes führen. Weiterhin können sich bei breiten Fügespalten und kurzen Lötprozesszeiten Sprödphasen im Lötspalt ausscheiden, die die mechanische Integrität zusätzlich beeinträchtigen.

Bislang wurden zum Fügen von Co-Basiswerkstoffen konventionelle Nickel-Basislote verwendet. Eine signifikante Einschränkung der mechanischen Eigenschaften im Bereich der Fügezone wurde dabei in Kauf genommen.

Es ist daher Aufgabe der Erfindung eine Lotlegierung, ein Pulver, ein Bauteil und ein Lotverfahren aufzuzeigen, mit dem Kobaltbasislegierungen bei hohen Temperaturen gelötet werden können und gute Fügeverbunde hergestellt werden.

Die Aufgabe wird gelöst durch eine Lotlegierung gemäß den Ansprüchen 1 und 2, ein Pulver gemäß dem Anspruch 3, und ein Verfahren gemäß den Ansprüchen 4 und 5.

In den Unteransprüchen sind weitere vorteilhafte Maßnahmen aufgelistet, die beliebig miteinander kombiniert werden können, um weitere Vorteile zu erzielen.
Durch die neuartige Kobalt-Legierung entfällt der Einsatz konventioneller Nickel-Lote.
Weiterhin kommen die neuartigen Lote ohne die typischen Schmelzpunkterniedriger Bor und Silizium aus, die zu der Bildung spröder Sekundärphasen führen können.
Die Verarbeitbarkeit manganhaltiger Kobalt-Lote in einem Temperaturbereich < 1473K ermöglicht eine Integration des Fügeprozesses in die Wärmebehandlung der Kobalt-Komponenten. Dadurch wird eine Zeit- und Kostenersparnis generiert.
Die Beschreibung stellt nur Ausführungsbeispiele der Erfindung dar.
Es wird vorgeschlagen mit neuartigen bor- und siliziumfreien Kobalt-Basisloten zu arbeiten, die Mangan (Mn) als wesentlichen Schmelzpunkterniedriger enthalten.
Auch andere Schmelzpunkterniedriger Gallium (Ga) und Germanium (Ge) sind nicht vorhanden.

Die kobaltbasierte Lotlegierung besteht aus:
Zirkon (Zr), 8 Gew.-% - 16 Gew.-%, insbesondere 15 Gew.-%,
Tantal (Ta), 6 Gew.-% - 10 Gew.-%, insbesondere 8 Gew.-%,
Kohlenstoff (C), 0,5 Gew.-% - 1,5 Gew.-%, insbesondere 1 Gew.-%,
Mangan (Mn), 8 Gew.-% - 12 Gew.-%, insbesondere 10 Gew.-%,
optional Titan (Ti) mindestens 0,5 Gew.-% und maximal 5 Gew.-%; Rest Kobalt.

Als Ausgangssystem wird vorzugsweise das quarternäre System Co-15Zr-8Ta-1C (in Gew.-%) betrachtet, welches mit Mangan (Mn) auflegiert wird.

Mangan (Mn) weist eine hohe Löslichkeit innerhalb der Kobaltmatrix auf, so dass die Ausscheidung von Sprödphasen verhindert werden kann.

Der Schmelzpunkt kann durch Zugabe von 10 Gew.-% Mangan (Mn) auf < 1473K gesenkt werden.

Weiterhin können geringe Mengen von Titan (Ti) von 0,5 Gew.-% bis 5 Gew.-% zur weiteren Schmelzpunktreduzierung beigemischt werden. Titan fungiert in der Kobaltmatrix darüber hinaus neben Tantal (Ta) als Karbidbildner und sorgt damit für eine Verfestigung der Fügezone.

Substrate, die mit der kobaltbasierten Lotlegierung gelötet werden, unterscheiden sich deutlich, d.h. insbesondere sie weisen andere Element auf oder weisen insbesondere kein Mangan auf.

## Patentansprüche

1. Kobaltbasierte Lotlegierung,
die bestehend aus:
8 Gew.-% - 16 Gew.-% Zirkon (Zr),
6 Gew.-% - 10 Gew.-% Tantal (Ta),
0,5 Gew.-% - 1,5 Gew.-% Kohlenstoff (C),
8 Gew.-% - 12 Gew.-% Mangan (Mn),
optional mindestens 0,5 Gew.-% Titan (Ti) und maximal 5 Gew.-% Titan (Ti);
Rest Kobalt.

2. Legierung nach Anspruch 1,
bestehend aus Zirkon (Zr), Tantal (Ta), Kohlenstoff (C), Mangan (Mn), Kobalt (Co) und Titan (Ti).

3. Pulver
bestehend aus einer Legierung nach Anspruch 1 oder 2.

4. Verfahren zum Löten
mit einer Legierung nach einem oder beiden der Ansprüche 1 oder 2,
oder mit einem Pulver nach Anspruch 3.

5. Verfahren nach Anspruch 4,
zum Löten von Kobaltbasislegierungen,
die mit einer Wärmebehandlung nach dem Stand der Technik für eine Kobaltlegierung,
die sich deutlich unterscheidet von der Legierung nach Anspruch 1 oder 2,
durchgeführt wird,
wobei "deutlich unterscheidet" bedeutet, dass die Legierung andere Elemente aufweist oder kein Mangan (Mn) aufweist.

## Claims

1. Cobalt-based solder alloy,
consisting of:
8% by weight - 16% by weight zirconium (Zr),
6% by weight - 10% by weight tantalum (Ta),
0.5% by weight - 1.5% by weight carbon (C),
8% by weight - 12% by weight manganese (Mn),
optionally at least 0.5% by weight titanium (Ti) and at most 5% by weight titanium (Ti),
remainder cobalt.

2. Alloy according to Claim 1,
consisting of zirconium (Zr), tantalum (Ta), carbon (C), manganese (Mn), cobalt (Co) and titanium (Ti).

3. Powder
consisting of an alloy according to Claim 1 or 2.

4. Soldering method
using an alloy according to one or both of Claims 1 and 2, or using a powder according to Claim 3.

5. Method according to Claim 4,
for soldering cobalt-based alloys
which is carried out with heat treatment according to the prior art for a cobalt alloy
that differs markedly from the alloy according to Claim 1 or 2,
wherein "differs markedly" means that the alloy has other elements or has no manganese (Mn).

## Revendications

1. Alliage de soudure à base de cobalt,
qui est constitué de :
8% en poids à 16% en poids de zirconium (Zr),
6% en poids à 10% en poids de tantale (Ta),
0,5% en poids à 1,5% en poids de carbone (C),
8% en poids à 12% en poids de manganèse (Mn),
éventuellement au moins 0,5% en poids de titane (Ti) et au maximum 5% en poids de titane (Ti);
le reste étant du cobalt.

2. Alliage suivant la revendication 1,
consistant en zirconium (Zr), tantale (Ta), carbone (C), manganèse (Mn), cobalt (Co) et titane (Ti).

3. Poudre
constituée d'un alliage suivant la revendication 1 ou 2.

4. Procédé de soudage
par un alliage suivant l'une ou plusieurs des revendications 1 ou 2,
ou par une poudre suivant la revendication 3.

5. Procédé suivant la revendication 4,
pour souder des alliages à base de cobalt,
qui s'effectue par un traitement thermique suivant l'état de la technique pour un alliage de cobalt,
qui se distingue nettement de l'alliage suivant la revendication 1 ou 2,
dans lequel "se distingue nettement" signifie que l'alliage a d'autres éléments ou n'a pas de manganèse (Mn).
